# EUROPEAN PATENT SPECIFICATION

(11) **EP 0 725 362 B1**
(45) Date of publication and mention of the grant of the patent: **02.01.2002**
(21) Application number: 96300726.5
(22) Date of filing: 01.02.1996
(51) Int. Cl.: G06T 7/40, G06T 3/40, H04N 1/40

(54) **Method of extracting a texture region from an input image**
Verfahren zur Extraktion eines texturierten Bereiches eines Eingabebildes
Méthode d'extraction d'une zone texturée d'une image d'entrée

(30) Priority: 02.02.1995 JP 3936595; 10.02.1995 JP 4648195
(43) Date of publication of application: 07.08.1996
(73) Proprietor: VICTOR COMPANY OF JAPAN, LIMITED, Kanagawa-ku Yokohama (JP)
(72) Inventor: Yamada, Kunio, Yokohama (JP)
(74) Representative: Dempster, Benjamin John Naftel

(56) References cited:
- ENERGY AND INFORMATION TECHNOLOGIES IN THE SOUTHEAST, COLUMBIA, APRIL 9 - 12, 1989, vol. 2 OF 3, 9 April 1989, INSTITUTE OF ELECTRICAL AND ELECTRONICS ENGINEERS, pages 733-737, XP000076710 VAIDYANATHAN G ET AL: "TEXTURE DIRECTION ANALYSIS USING EDGE COUNTS"
- PROCEEDINGS OF THE INTERNATIONAL CONFERENCE ON SYSTEMS ENGINEERING, KOBE, SEPT. 17 - 19, 1992, no. -, 17 September 1992, INSTITUTE OF ELECTRICAL AND ELECTRONICS ENGINEERS, pages 399-402, XP000343764 MITCHELL T A ET AL: "A MACHINE VISION SYSTEM USING FAST TEXTURE ANALYSIS FOR AUTOMATED VISUAL INSPECTION"

## Description

The present invention relates generally to an improvement on a method of extracting a texture region from an objective picture.

Usually, a texture region of a picture is a redundant area which is visually perceived by the human eye as images dispersed uniformly at a substantially uniform gray level even if they are not uniform exactly. It is useful for image compression to discriminate a texture region from a non-texture region. In general, the discrimination between a texture region and a non-texture region in a picture is achieved by extracting the texture region from the picture. A texture of a natural picture is usually formed in busy patterns wherein homogeneous areas are unclear. The property of the texture is, therefore, extracted in order to clarify a structure of the texture. As methods of extracting a texture, (1) use of an average value and a variance of gray levels and (2) use of spectrum information on orthogonal transformation are well known in the art.

The former method using the average value and the variance of gray levels, however, encounters the following drawback. It is impossible to use an average value and a variance of gray levels in an area lacking homogeneity even if the area lies within a texture region of a natural picture, as visually perceived as one area, for extracting the texture region from the picture. Further, an average value and a variance of gray levels of a texture region may be close to those of a non-texture region according to a type of texture. It is difficult to discriminate between the texture region and the non-texture region.

The latter method using the spectrum information on the orthogonal transformation encounters the following drawback. In this method, a texture is identified based on high-frequency spectra derived for every cell. Thus, if the contour of a non-texture region extends across a cell, it is very difficult or impossible to discriminate between a texture region and the non-texture region since high-frequency portions of the non-texture region and the texture region may exist in the same cell.

A paper by G. Vaidyanathan and P.M. Lynch entitled "Texture direction analysis using edge counts" was published in Southeastcon '89 Proceedings Volume 2 starting at page 733. The paper discloses the modelling of texture as an arrangement of "edges". The orientation of the "edges" is determined in relation to the directions horizontal, vertical, right diagonal and left diagonal. The "edges" are determined from variations in local grey levels.

A paper by T.A. Mitchell and M. Sarhadi entitled "A machine vision system using fast texture analysis for automated visual inspection" was published in the collected papers of the IEEE International Conference on Systems Engineering of 1992 starting at page 399. This discloses a system for automated visual inspection of carbon fabric workpieces to assist in boundary recognition. N different filter masks are used to provide a set of N feature images representing a vector for each pixel of the original image.

It is therefore a principal object of the present invention to avoid the disadvantages of the prior art.

It is another object of the present invention to provide an improved method of discriminating between a texture region and a non-texture region to extract the texture region from an input image with high accuracy.

According to the present invention, there is provided a method of extracting a texture region from an input image comprising the steps of:
establishing a line image from the input image using a spatial filter which determines for each pixel of the input image in which one of a plurality of preselected line directions the pixel and the pixels adjacent that pixel lie, defining the direction of that pixel as the direction of the line, determining the number of the pixels showing the same direction for each of the preselected directions and extracting from the input image as the texture region an area where the number of the pixels showing the same direction for at least one of the preselected directions is greater than a given value and the dispersion value of the pixels showing the same direction is greater than a given dispersion value.

In the preferred mode of the invention, the pixels lying adjacent each of all pixels are pixels arranged around a central pixel within each of cells formed with a matrix of preselected number of pixels. The area extracted from the input image as the texture region is an area where the number of the pixels showing the same direction for the at least one of the preselected directions is greater than the given value and the sum of dispersion values of the pixels showing the same direction for all the preselected directions is greater than the given dispersion value.

The area determined as the texture region is smoothed by defining an average value of brightness levels of pixels around each of the pixels within the area determined as the texture region as a brightness level of the each of the pixels.

An area where the number of pixels having a preselected brightness level is greater than a predetermined value within the texture region, is determined ultimately as the texture region.

The area determined as the texture region is classified into some different types of texture regions according to both the number of pixels having the same direction for each of the preselected directions, arranged around each pixel within the area and the dispersion value thereof.

In another embodiment of the present invention, the method includes counting in each line of pixels in each preselected direction over a predetermined length how many pixels show the same direction as the preselected direction and extracting from the input image as the texture region an area where the number of the pixels counted in said counting step for each of the preselected directions is smaller than a given value.

In the preferred mode of the invention, the pixels lying adjacent each of all pixels are pixels arranged around a central pixel within each of cells formed with a matrix of a preselected number of pixels. The cell in which, of the pixels arranged around the central pixel in the same direction as each of the preselection directions, the number of pixels showing the same direction as the direction in which the pixels are arranged is smaller than the given value for each of the preselected directions, is defined as lying within the texture region, and a value obtained by multiplying the sum of pixels showing the same direction in all the preselected directions by a constant is defined as a brightness level of the central pixel of the cell.

The area determined as the texture region is smoothed by defining an average value of brightness levels of pixels around each of the pixels within the area determined as the texture region as a brightness level of the each of the pixels.

An area where the number of pixels having a preselected brightness level is greater than a predetermined value within the texture region, is determined ultimately as the texture region.

In a further embodiment of the present invention, there is provided a method including for each pixel forming the input image, defining a cell formed of a matrix of a plurality of pixels arranged around that pixel which is a central pixel of the matrix, defining triangles having vertexes defined on a given adjacent three of the pixels in each of the cells, defining said triangles in a three-dimensional space where positions of the pixels of each of the cells are expressed as coordinates on a two-dimensional plane and signal levels of the pixels are expressed as coordinates on an orthogonal axis extending perpendicular to the two-dimensional plane, determining unit normal vectors of the triangles defined in the three-dimensional space and determining a mean vector of all the unit normal vectors, detecting an area where there are end points of line images from the input image based on the mean vector of all the unit normal vectors and extracting the detected area from the input image as the texture region when the end points of the line images exist at a density greater than a given value.

In the preferred mode of the invention, when the mean vector of all the unit normal vectors is oriented at a more than given angle to the orthogonal axis and when a dispersion value of the unit normal vectors from the mean vector is greater than a given value, the end points of the line images are determined as existing in the detected area at the density greater than the given value.

Alternatively, when the mean vector of all the unit normal vectors is oriented at a more than given angle to the orthogonal axis and when the sum of areas of all the triangles is greater than a given value, the end points of the line images are determined as existing in the detected area at the density greater than the given value.

Alternatively, when a high-frequency component of spatial frequency components derived by orthogonal transformation of the objective picture is greater than a given value, the end points of the line images are determined as existing in the detected area at the density greater than the given value.

The area detected as the texture region is smoothed by defining an average value of brightness levels of pixels around each of the pixels within the area detected as the texture region as a brightness level of the each of the pixels.

An area where the number of pixels having a preselected brightness level is greater than a predetermined value within the texture region, is determined ultimately as the texture region.

The present invention will be understood more fully from the detailed description given hereinbelow and from the accompanying drawings of the preferred embodiments of the invention, which, however, should not be taken to limit the invention to the specific embodiments but are for explanation and understanding only.

In the drawings:
Fig. 1 is a flowchart of a program for extracting a texture region from a picture according to the first embodiment of the invention;
Fig. 2 shows an example of a texture region to be extracted by a method according to the first embodiment;
Fig. 3 shows another example of a texture region to be extracted by a method according to the first embodiment;
Fig. 4 shows an example of a non-texture region to be detected by a method according to the first embodiment;
Fig. 5 shows another example of a non-texture region to be detected by a method according to the first embodiment;
Fig. 6(A) shows an example of a texture region to be extracted by a method according to the first embodiment;
Figs. 6(B) to 6(E) show portions of the texture region in Fig. 6(A) extracted in horizontal, vertical, left slant, and right slant directions;
Fig. 7(A) shows an example of a non-texture region to be detected by a method according to the first embodiment;
Figs. 7(B) to 7(E) show portions of the non-texture region in Fig. 7(A) detected in horizontal, vertical, left slant, and right slant directions;
Fig. 8 shows an example of an original picture from which a texture region is to be extracted by a method according to the present invention;
Fig. 9 shows a picture derived by extracting a high-frequency portion of the original picture in Fig. 8;
Fig. 10 shows a picture derived by expressing pixels having horizontal, vertical, left slant, and right slant directions in five gradual brightness levels, respectively;
Fig. 11 shows a picture wherein a texture region is emphasized by a method of the first embodiment;
Fig. 12 shows a picture derived by smoothing the texture region-emphasized picture in Fig. 11;
Fig. 13 shows a picture derived by binary-coding the picture in Fig. 12;
Fig. 14 shows a picture derived by removing error portions generated by binary-coding from the picture in Fig. 13;
Fig. 15 shows a picture formed by extracting images which correspond to white areas in Fig. 14 from the original picture in Fig. 8;
Figs. 16(A) to 16(H) show spatial filters for detecting horizontal, vertical, left slant, and right slant lines in the original picture in Fig. 8;
Fig. 17 is a flowchart of a program for extracting a texture region from a picture according to the second embodiment of the invention;
Fig. 18 shows a picture wherein a texture region is emphasized by a method of the second embodiment;
Fig. 19 shows a picture derived by smoothing the texture region-emphasized picture in Fig. 18;
Fig. 20 shows a picture derived by binary-coding the picture in Fig. 19;
Fig. 21 shows a picture derived by removing error portions generated by binary-coding from the picture in Fig. 20;
Fig. 22 shows a picture formed by extracting images which correspond to white areas in Fig. 21 from the original picture in Fig. 8;
Figs. 23(A) to 23(D) show examples of a texture region to be extracted by a method according to the third embodiment of the invention;
Fig. 24 is a flowchart of a program for extracting a texture region from a picture according to the third embodiment of the invention;
Fig. 25 shows a cell formed with 7 × 7 pixels arranged in an objective picture;
Fig. 26 shows a cell divided into a group of triangles:
Fig. 27 shows an example of an image of an end point in an objective picture;
Fig. 28 shows the image of Fig. 27 expressed by triangles oriented in a three-dimensional space;
Fig. 29 shows orthogonal projections of the triangles of Fig. 28 onto an xy-plane;
Fig. 30 shows a flat image formed with pixels having substantially the same brightness level;
Fig. 31 shows orthogonal projections of normal vectors of the triangles of the flat image of Fig. 30 onto an xy-plane;
Fig. 32 shows a line image wherein pixels of substantially the same brightness level are arranged in the same direction to form a line having a certain width;
Fig. 33 shows orthogonal projections of normal vectors of the triangles of the line image of Fig. 32 onto an xy-plane;
Fig. 34 shows a block image wherein pixels each having a higher brightness level are arranged at the center of a cell and surrounded by pixels each having a lower brightness level;
Fig. 35 shows orthogonal projections of normal vectors of the triangles of the block image of Fig. 34 onto an xy-plane;
Fig. 36 shows a gradation image wherein brightness levels of pixels are graded in a horizontal direction;
Fig. 37 shows orthogonal projections of normal vectors of the triangles of the gradation image of Fig. 36 onto an xy-plane;
Fig. 38 shows a contour image wherein a group of pixels of a lower brightness level are arranged adjacent a group of pixels of a higher brightness level and oriented in a vertical direction so as to have a constant width;
Fig. 39 shows orthogonal projections of normal vectors of the triangles of the contour image of Fig. 38 onto an xy-plane;
Fig. 40 shows a picture wherein a texture region is emphasized by a method of the third embodiment;
Fig. 41 shows a picture derived by smoothing the texture region-emphasized picture in Fig. 40;
Fig. 42 shows a picture derived by binary-coding the picture in Fig. 41;
Fig. 43 shows a picture derived by removing error portions generated by binary-coding from the picture in Fig. 42; and
Fig. 44 shows a picture formed by extracting images which correspond to white areas in Fig. 43 from the original picture in Fig. 8.

The preferred embodiment will now be described.

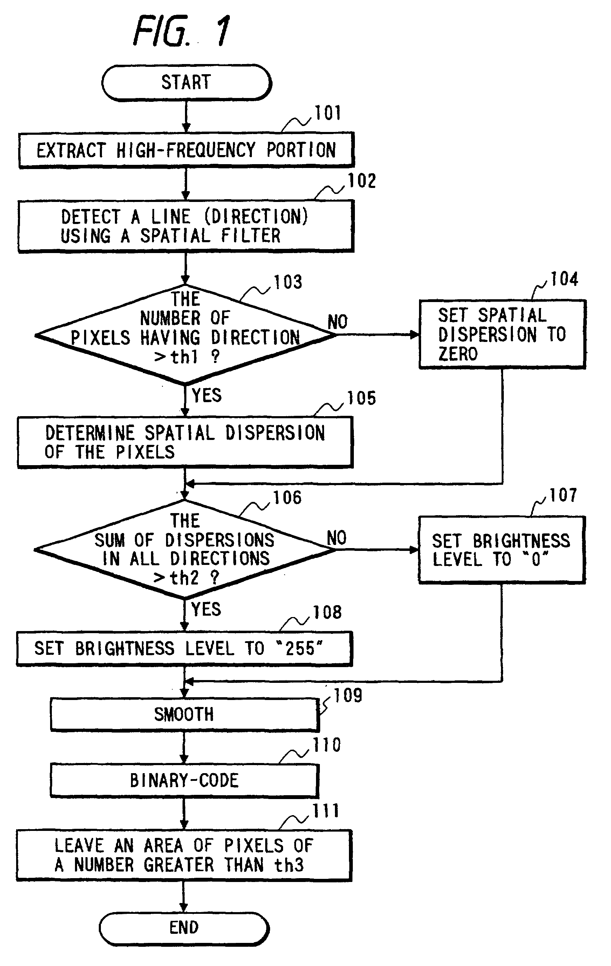

Referring now to the drawings, particularly to Fig. 1, a flowchart of a sequence of logical steps performed for extracting a texture region from an objective picture according to the first embodiment of the invention.

In this embodiment, each of all pixels forming an objective picture (i.e., a frame) is defined as an objective pixel lying at the center of each cell formed with a matrix of 7 × 7 pixels, from which a texture is to be detected, and if some cell may be viewed as lying within a texture region, the objective pixel of the cell is determined as representing part of the texture.

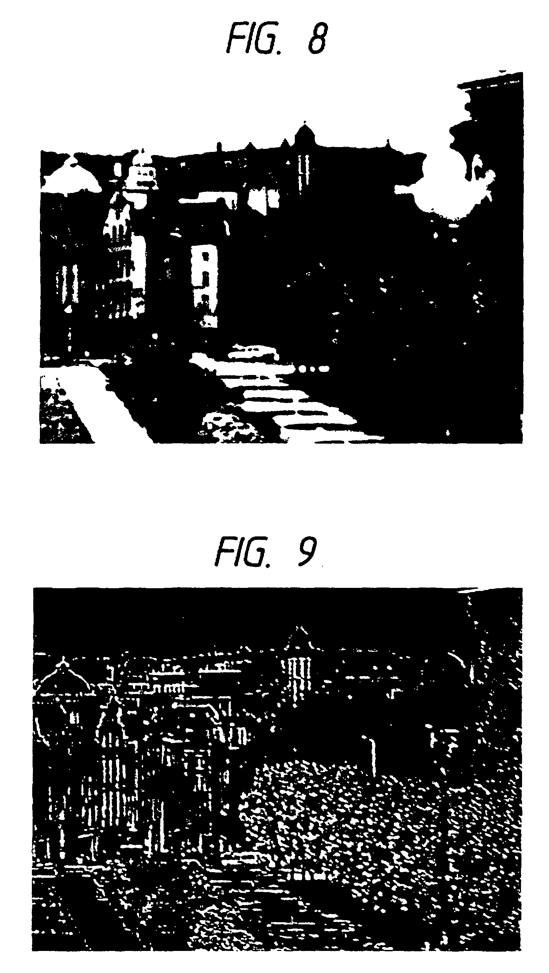

In the following discussion with reference to the flowchart of Fig. 1, it is assumed that a natural scene shown in Fig. 8 is an objective original picture, and plants on a central lower side and woods on a right lower side form a texture region to be extracted from the original picture. This embodiment aims at converting the texture region into a white image.

After entering the flowchart, the routine proceeds to step 101 wherein a high-frequency portion is emphasized against a 50% gray level background by using a 3 × 3 spatial filter (i.e., an operator) and then extracted from the original picture in order to clarify the property of the texture to form a high-frequency extracted picture, as shown in Fig. 9.

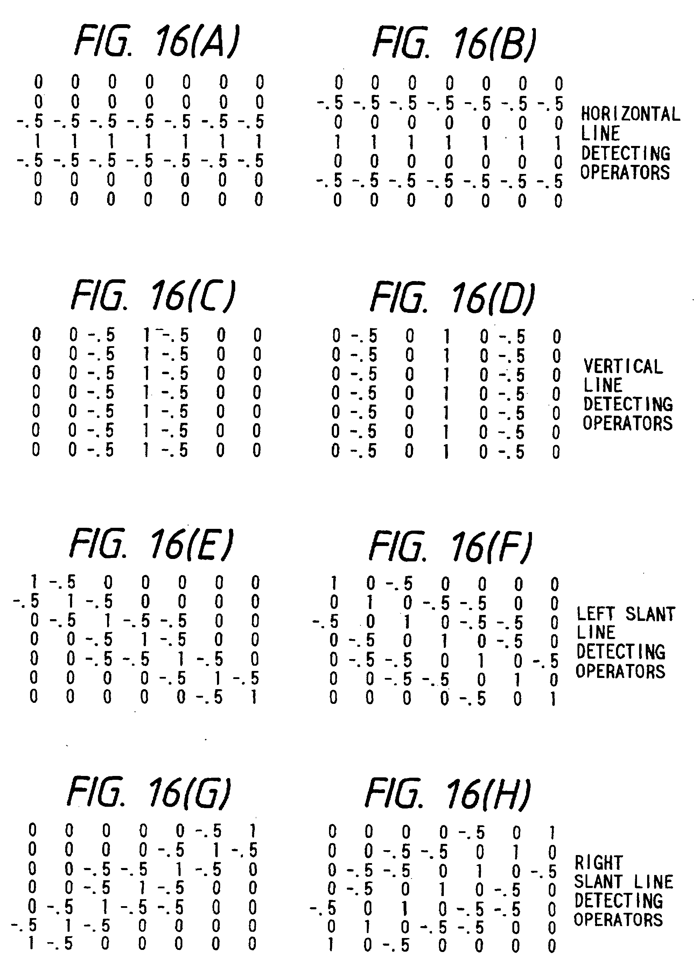

The routine proceeds to step 102 wherein the direction of each objective pixel of the high-frequency extracted picture is determined using eight types of 7 × 7 spatial filters (i.e., operators) shown in Figs. 16(A) to 16(H). Figs. 16(A) and 16(B) represent horizontal line detecting operators, Figs. 16(C) and 16(D) represent vertical line detecting operators, Figs. 16(E) and 16(F) represent left slant line detecting operators for detecting slant lines extending to the upper left, and Figs. 16(G) and 16(H) represent right slant line detecting operators for detecting slant lines extending to the upper right. As apparent from the drawings, two types of operators are used for any of the four directions since there are two types of thicknesses (i.e., resolutions).

By the use of the spatial filters, for example, the horizontal line detecting operator of Fig. 16(A), a value (i.e., a brightness level) of an objective pixel lying at the center of each cell is multiplied by 1 at the center of the horizontal line detecting operator, values of pixels around the central objective pixel are also multiplied by corresponding values of the horizontal line detecting operator, respectively, and an absolute value of the sum of resultant values is determined as a value of the objective pixel.

In this way, eight absolute values are derived by all the operators in Figs. 16(A) to 16(H). When the greatest of the eight absolute values exceeds a given threshold value, the central objective pixel of the cell is determined as having one of the horizontal, vertical, left slant, and right slant directions, as indicated by the greatest absolute value, regardless of the thickness thereof. In other words, the direction of a line image represented by pixels around the central pixel of each cell is determined and then defined as the direction represented by the central pixel.

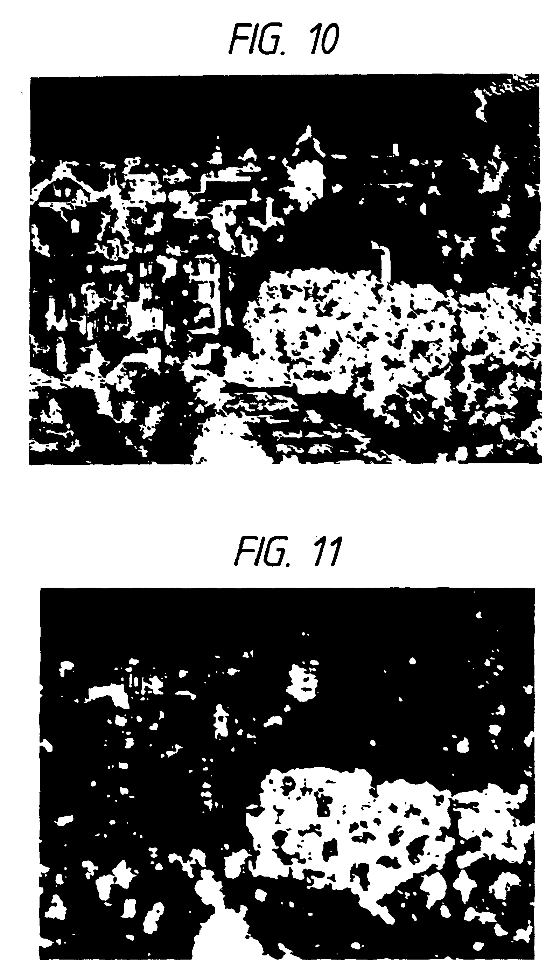

Fig. 10 shows a picture when brightness levels of central pixels determined as having the horizontal direction are set to "160", brightness levels of central pixels determined as having the vertical direction are set to "190", brightness levels of central pixels determined as having the left slant direction are set to "220", and brightness levels of central pixels determined as having the right slant direction are set to "250", as expressed in 8-bit (256) gradations, for example. This picture is, thus, expressed in five gradations along with the brightness level of "0" having no direction. It is advisable that information on these directions be prepared as data in itself. It is not necessary to indicate each of the four directions by a brightness level, but the picture of Fig. 10 is illustrated for reference only.

Subsequently, the routine proceeds to step 103 wherein the number of pixels determined as having the same direction is counted for every direction by shifting the cell of 7 × 7 pixels, in sequence, at one-pixel intervals over the picture (i.e., a frame), and it is determined whether the number of pixels in each direction is greater than a threshold value th1 or not. For example, for the horizontal direction, the number of pixels having the brightness level of "160" is counted throughout cells of the picture in Fig. 10.

If a NO answer is obtained, meaning that the number of pixels having a particular direction is too small to discriminate the brightness level thereof from noise, then the routine proceeds to step 104 wherein a spatial dispersion value of these pixels is defined as zero (0), and the pixels are not used to detect a texture in that direction. Alternatively, if a YES answer is obtained in step 103, then the routine proceeds to step 105 wherein a dispersion value of the pixels on a plane (i.e., a frame) in each of the four directions is determined. While the determination of the dispersion value may be made in various known manners, this embodiment calculates the centroid of the pixels having the same direction to derive a mean distance from the centroid to the pixels as the dispersion value. Alternatively, it is desirable that a mean distance between pixels each having all the four directions be determined as the dispersion value.

After step 104 or 105, the routine proceeds to step 106 wherein it is determined whether the sum of the dispersion values of the pixels in the four directions is greater than a threshold value th2 or not. Since this embodiment aims only at discriminating a texture region from a non-texture region, determination in step 106 is made simply using the sum of the dispersion values.

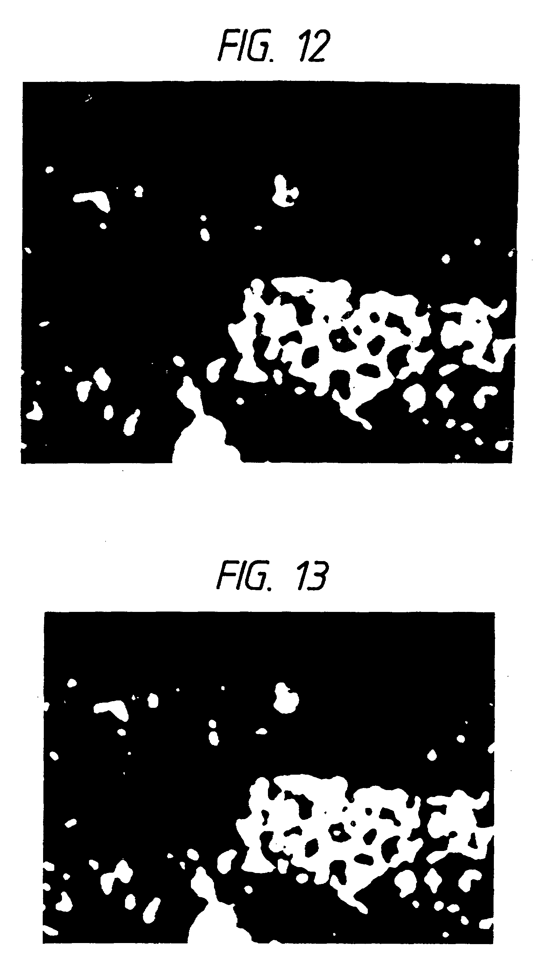

If a NO answer is obtained, meaning that the sum of the dispersion values is smaller than the threshold value th2, then the routine proceeds to step 107 wherein a brightness level of "0" is provided to the pixels as points in a non-texture region.
Alternatively, if a YES answer is obtained, then the routine proceeds to step 108 wherein a brightness level of "255" is provided to the pixels determined as having any one of the four directions as points in a texture region. This obtains a texture region emphasized picture, as shown in Fig. 11.

It is advisable that directions of textures be weighted according to types of the textures for extracting a texture exhibiting a strong orientation in a particular direction. Additionally, an area determined as a texture region may be classified into some different types of texture regions according to both the number of pixels having the same direction for each of the four directions, arranged around each objective pixel within the area determined as the texture region and a dispersion value thereof.

White portions of the texture region emphasized image thus derived contain not only textures, but also complicated contours of non-textures as detected as textures even though most of non-textures containing high-frequency portions such as windows of a building are not detected. Additionally, there are some micro areas detected as non-textures in texture regions.

Next, the routine proceeds to step 109 wherein the micro areas determined as the non-textures are smoothed by cells of 7 × 7 (49) pixels in a manner wherein the average of values of 49 pixels of each of the cells in the texture region is defined as a value of a central pixel of each of the cells. This operation provides a picture shown in Fig. 12.

The routine proceeds to step 110 wherein the picture smoothed in step 109 is binary-coded to form a binary-coded picture shown in Fig. 13 wherein the micro error areas are, as can be seen in the drawing, much decreased as compared with the texture region emphasized picture in Fig. 11.

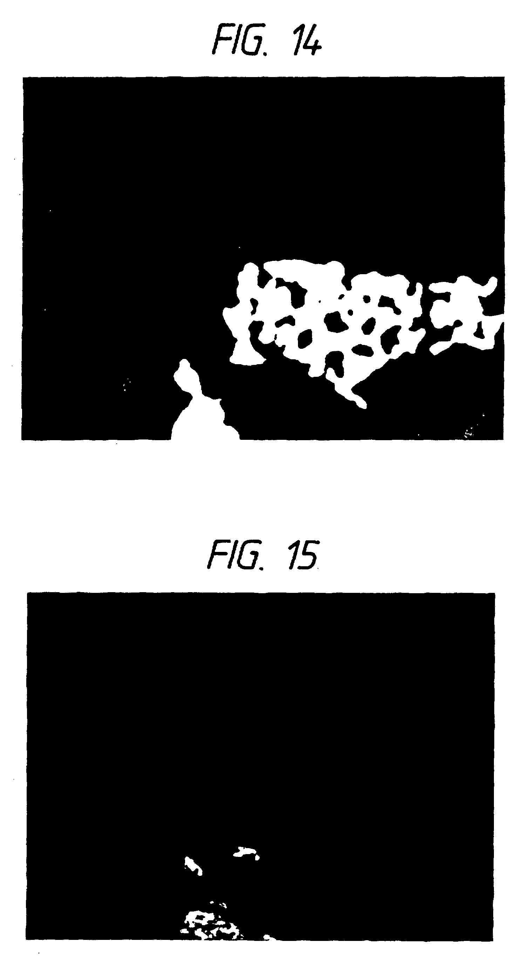

The routine proceeds to step 111 wherein areas other than large areas each formed with pixels of a number greater than a threshold th3 in white areas (i.e., areas formed with pixels each having the brightness level of "255") of the binary-coded picture of Fig. 13 are removed. This eliminates the micro error areas from the binary-coded picture to derive a picture shown in Fig. 14.

It will be appreciated that texture regions painted white in the picture of Fig. 14 correspond to the original picture of Fig. 8 from which most of areas to be visually perceived by the human eye as textures are extracted.

Fig. 15 shows a picture formed by extracting images which correspond to the white areas in Fig. 14 from the original picture in Fig. 8. It is found that Fig. 15 extracts substantially a texture of leaves.

As apparent from the above discussion, the above first embodiment is designed to detect a texture region based on the direction of an image indicated by pixels near each pixel in an objective picture. In other words, it is first determined which direction the top of a roof or the bottom of a valley on which an objective pixel lies in signal level extends in. Next, it is determined whether or not the number of pixels having the same direction for some directions within a particular objective area of the picture is greater than a given value and whether or not they are moderately dispersed in the objective area (i.e., a plane). If they are dispersed moderately, the objective area is considered as a texture region and then extracted from the picture. A texture region may, thus, be defined as an area complicated with different directions or an area where pixels have a particular direction, but are dispersed moderately, and not an area having a particular gray level or an area having a particular high-frequency spectrum pattern.

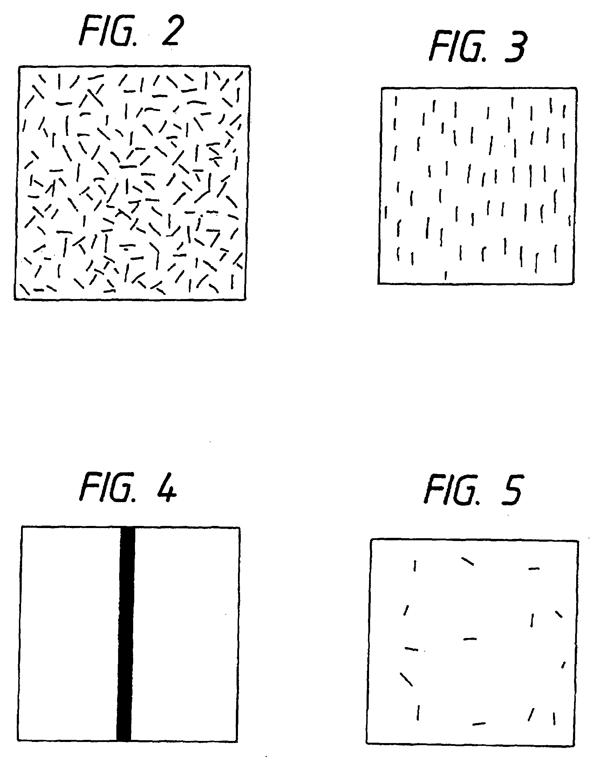

Accordingly, an area having a pattern wherein some pixels in an objective picture, as shown in Fig. 2, form lines which extend some different directions and are dispersed moderately is determined as a texture region. Additionally, an area having a pattern wherein some pixels in an objective picture, as shown in Fig. 3, form lines which extend one particular direction, but are dispersed moderately on a plane is also determined as a texture region. However, an area having a pattern wherein some pixels in an objective picture are concentrated on a plane to form a line extending in one particular direction such as a vertical direction is determined as a non-texture region. This permits the contour of a non-texture to be discriminated from a texture.

Further, a portion of an area determined as a texture region in which the number of pixels each having a brightness level higher than a given level is greater than a preselected value is determined ultimately as a texture region. Thus, if an area has a pattern wherein some pixels in an objective picture, as shown in Fig. 5, form line images which extend different directions and are dispersed moderately, but the number of pixels showing the directions (i.e., brightness levels greater than a given level) are smaller than a given value, it is determined as a non-texture region.

The second embodiment of the invention will be described below.

The second embodiment is based on the fact that pixels assuming a particular direction usually exist on a high-frequency portion such as a texture region or the contour of a non-texture region. In order to remove the contour of a non-texture from an objective picture, it is determined whether the number of pixels having a particular direction within a specified area is greater than a given value or not and whether these pixels are arranged in that particular direction. If so, an area in which these pixels lie is removed from the high-frequency portions, and the remainder thereof is determined as a texture region.

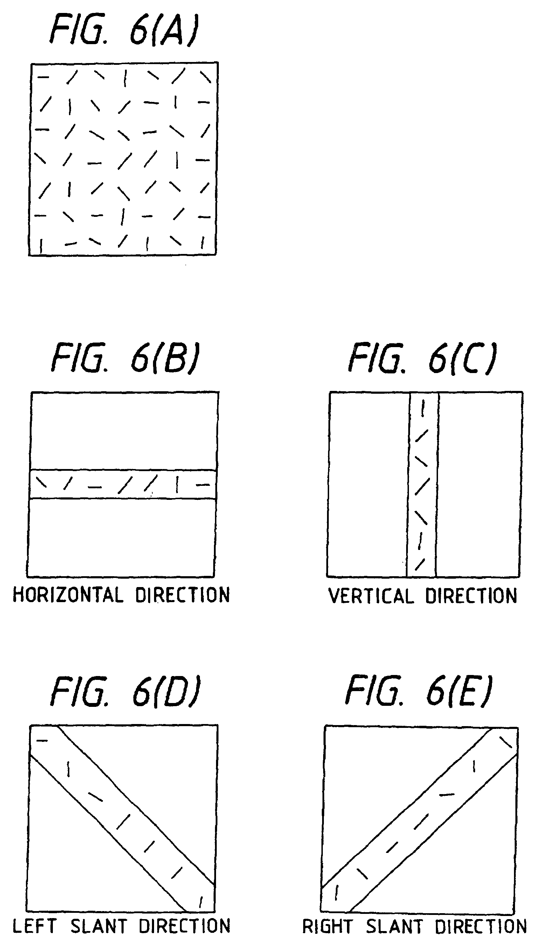

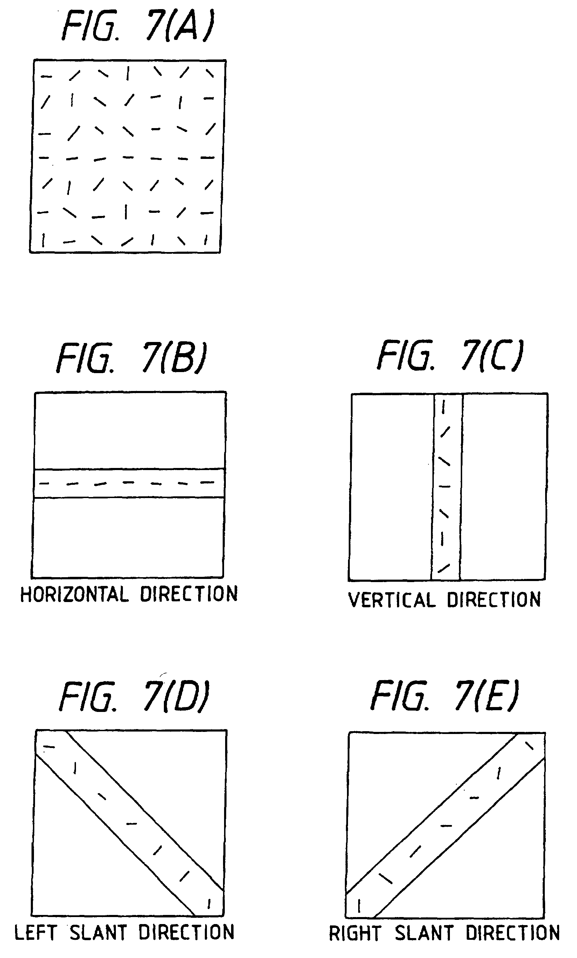

Therefore, if a cell formed with a matrix of seven (7) vertical pixels and seven (7) horizontal pixels having directions, as shown in Fig. 6(A) or 7(A), is detected, it means that the cell contains a large number of high-frequency portions. In either case, the cell may be viewed as a non-texture region.

However, in analyzing a direction of each pixel in the cell of Fig. 6(A) for four directions: horizontal, vertical, left slant, and right slant directions, it is found that the directions of the pixels arranged in each of the four directions, as shown in Figs. 6(B), 6(C), 6(D), and 6(E), are dispersed moderately, and, thus, the cell in Fig. 6(A) may be determined as lying within a texture region.

In contrast, in analyzing a direction of each pixel in the cell of Fig. 7(A) for the four directions, it is found that the directions of the pixels arranged in the vertical, left slant, and right slant directions, as shown in Figs. 7(C), 7(D), and 7(E), are dispersed moderately, but the pixels arranged in the horizontal direction, as shown in Fig. 7(B), are oriented only in the horizontal direction. It will, thus, be appreciated that there is the contour of a non-texture lying across the center of the cell. Therefore, the cell in Fig. 7 is determined as lying a non-texture region. Additionally, in this embodiment, even if most of pixels arranged in a particular direction have the same direction as the particular direction, a cell containing these pixels is determined as lying within a non-texture region.

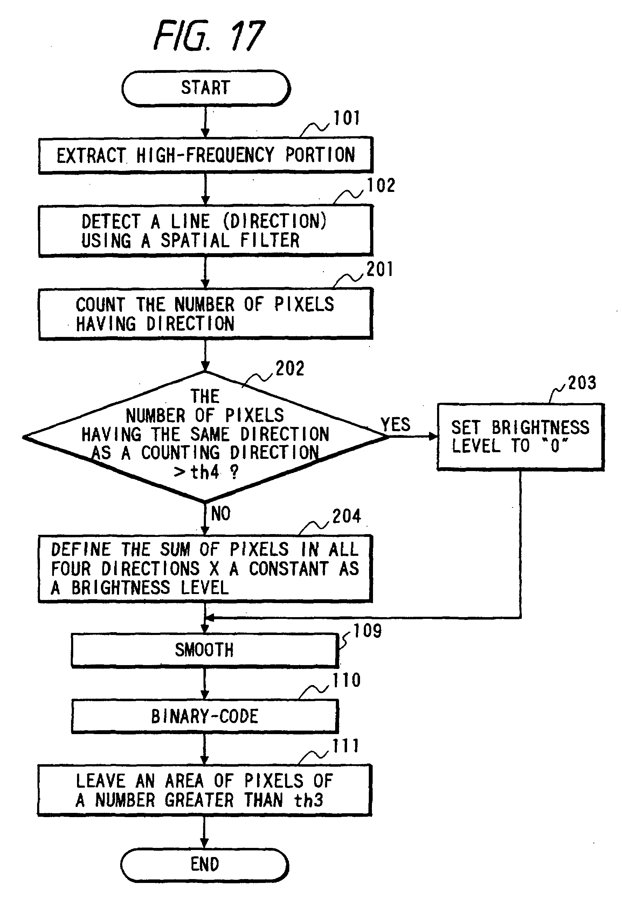

Fig. 17 shows a flowchart of a sequence of logical steps according to the second embodiment of the invention. Similar to the above first embodiment, each of all pixels forming an objective picture (i.e., a frame) is defined as an objective pixel lying at the center of each cell formed with a matrix of 7 × 7 pixels, from which a texture is to be detected, and if some cell may be viewed as lying within a texture region, the objective pixel of the cell is determined as representing part of the texture. The same reference numbers as employed in Fig. 1 refer to the same steps, and explanation thereof in detail will be omitted here.

This embodiment, likewise to the first embodiment, aims at detecting as texture regions plants on a central lower side and woods on a right lower side of the original picture of Fig. 8 in which differences in gray level and power spectrum in orthogonal transformation are smaller than those of an artificial picture.

After step 102, the routine proceeds to step 201 wherein the number of pixels determined in step 102 as having the same direction (i.e., the brightness levels of "160", "190", "220", or "250") is counted for each of the four directions: horizontal, vertical, left slant, and right slant directions to make a histogram.

The routine proceeds to step 202 wherein of pixels arranged in a counting direction in step 201, the number of pixels having the same direction as the counting direction is counted for each of the four directions. Assuming that the counting direction is horizontal, of seven pixels arranged horizontally within a cell, the number of pixels having the horizontal direction is counted. It is then determined whether the count value for each of the four directions is greater than a threshold th4 or not.

If the number of pixels in at least one of the four directions is greater than the threshold value th4, then the routine proceeds to step 203 wherein the brightness levels of "0" are given to the objective pixels as points within a non-texture region for the reason as already discussed with reference to Fig. 7.

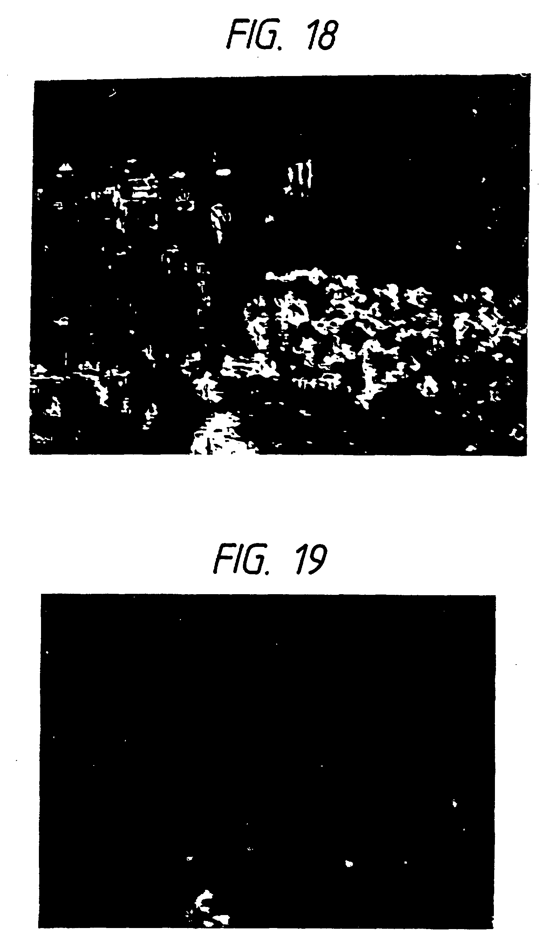

Alternatively, if the sum of pixels in all the four directions is smaller than the threshold value th4, it is concluded that the pixels are dispersed moderately in each of the four directions, and cells having these pixels fall within texture regions. The routine then proceeds to step 204 wherein a value obtained by multiplying the sum of pixels in all the four directions by a constant is defined as a brightness level of a central pixel of each of the cells. This forms a texture region emphasized picture as shown in Fig. 18.

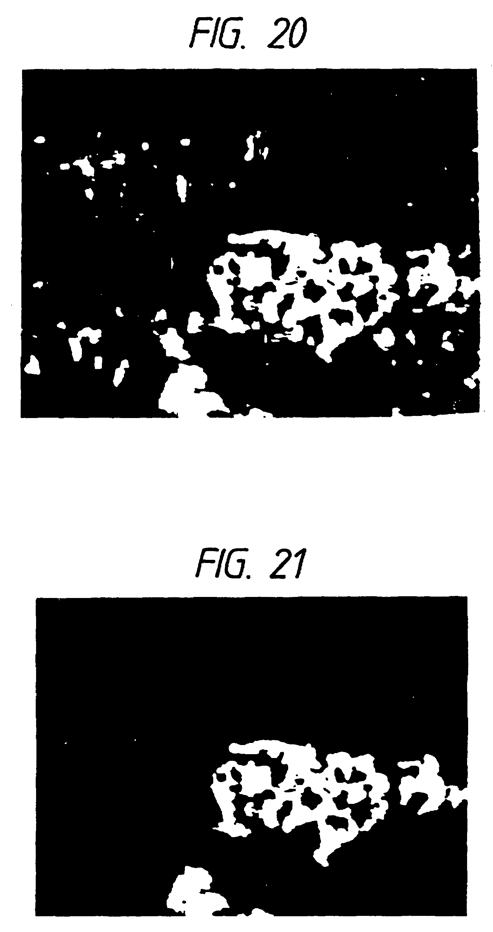

Steps after step 204 are the same as in the first embodiment. In brief, in step 109, the texture region emphasized picture is smoothed by cells of 7 × 7 (49) pixels to obtain a picture as shown in Fig. 19 wherein micro areas determined as non-textures are smoothed. In step 110, the thus smoothed picture is binary-coded to form a binary-coded picture shown in Fig. 20 wherein the micro error areas are much decreased as compared with the texture region emphasized picture in Fig. 18.

The routine then proceeds to step 111 wherein areas other than large areas each formed with pixels of a number greater than the threshold th3 within white areas (i.e., areas formed with pixels each having the brightness level of "255") of the binary-coded picture of Fig. 20 are removed. This eliminates the micro error areas from the binary-coded picture to derive a picture shown in Fig. 21.

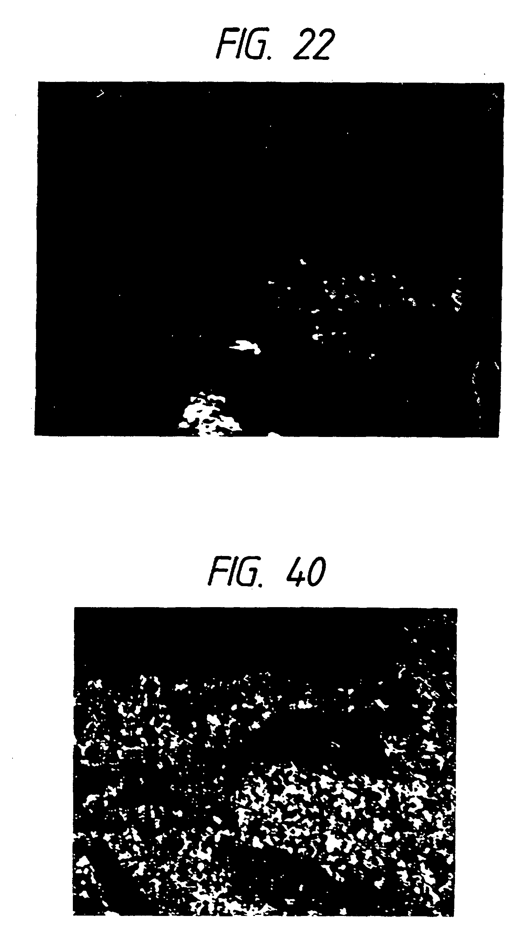

It will be appreciated that texture regions painted white in the picture of Fig. 21 correspond to the original picture of Fig. 8 from which most of areas to be visually perceived by the human eye as textures are extracted. Fig. 22 shows a picture formed by extracting images which correspond to the white areas in Fig. 21 from the original picture in Fig. 8. It is found that Fig. 22 extracts substantially a texture of leaves.

The third embodiment of the invention will be described below.

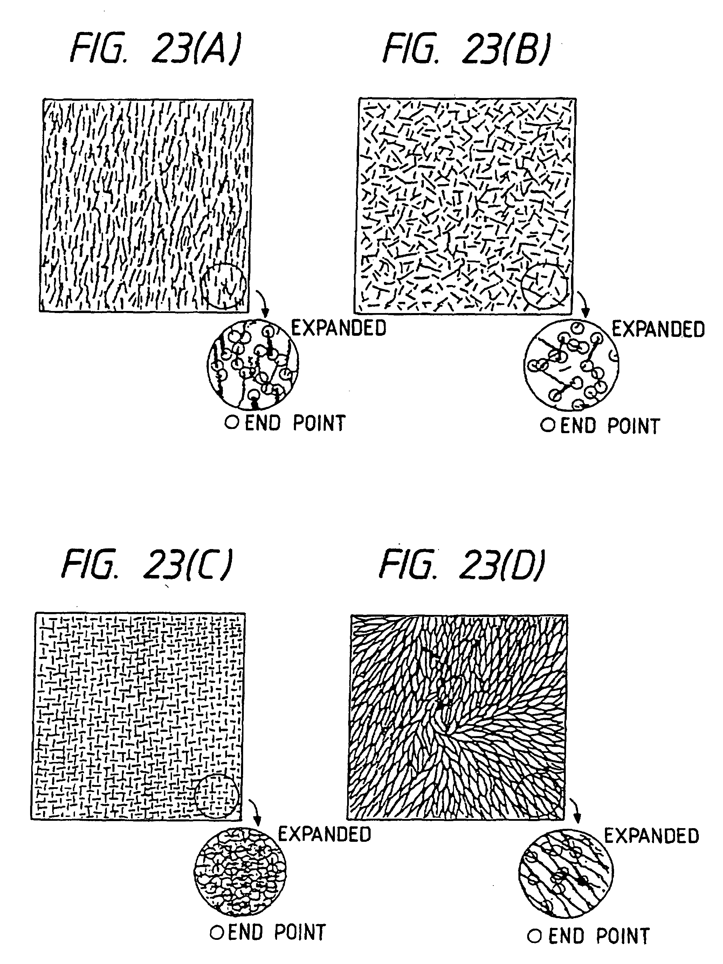

Figs. 23(A) to 23(D) show examples of typical textures. In each of partially expanded views, end points line images are represented by circles. The partially expanded views show that there are many end points in texture regions. Accordingly, in this embodiment, a portion where end points exist in a density greater than a given value is extracted by detecting an area where the mean vector of all unit normal vectors of a group of triangles defined in a three-dimensional space is oriented at a given angle or more to an orthogonal axis of a two-dimensional plane, and a dispersion value of all the unit normal vectors from the mean vector is greater than a fixed value.

As an alternative to detecting the area where the dispersion value of the unit normal vectors from the mean vector is greater than a fixed value, it is also possible to extract the portion where the end points exist in the density greater than the given value by detecting an area where the sum of areas of all the triangles on planes is greater than a given value or an area where a high-frequency component of a spatial frequency derived by orthogonal transformation of an original picture is greater than a given value.

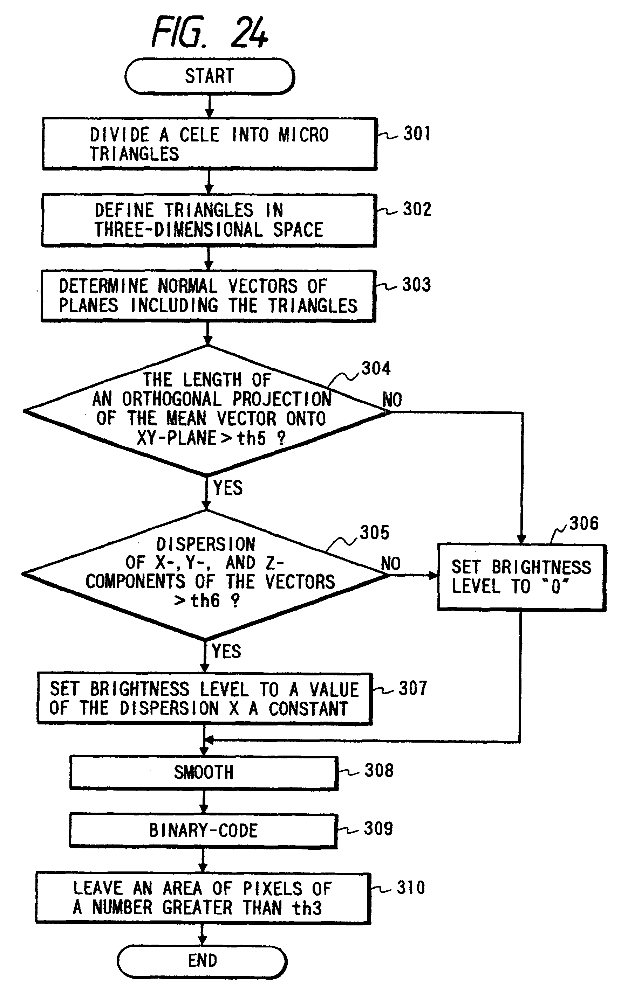

Fig. 24 shows a flowchart of a sequence of logical steps according to the third embodiment.

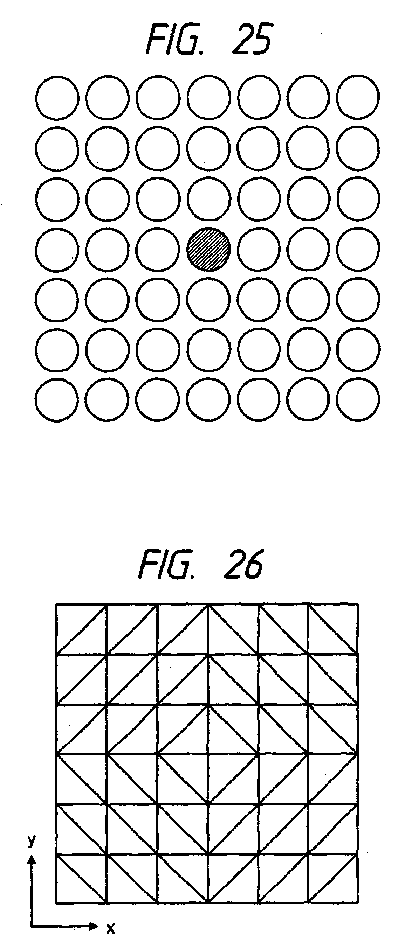

Likewise to the above embodiments, cells are defined over an objective picture each of which is formed with a matrix of 7 × 7 having a central pixel, as hatched in Fig. 25, defined as an objective pixel from which a texture is to be detected, and if any one of the cells may be viewed as lying within a texture region, the objective pixel of the cell is determined as part of the texture.

After entering the program in Fig. 24, the routine proceeds to step 301 wherein each of cells formed with a matrix of 7 × 7 pixels defining as a central pixel each of all pixels forming an objective picture from which a texture region to be extracted is divided into micro triangles whose vertexes are defined by adjacent three of the pixels in order to determine a texture region based on a group of planes defined in a three-dimensional space where signal levels (i.e., brightness levels) of the pixels are expressed on a z-axis.
Specifically, each of the cells in the objective picture is, as shown in Fig. 26, divided into seventy two (72) micro triangles defined on an xy-plane by three segments each extending between the centers of two of adjacent three pixels.

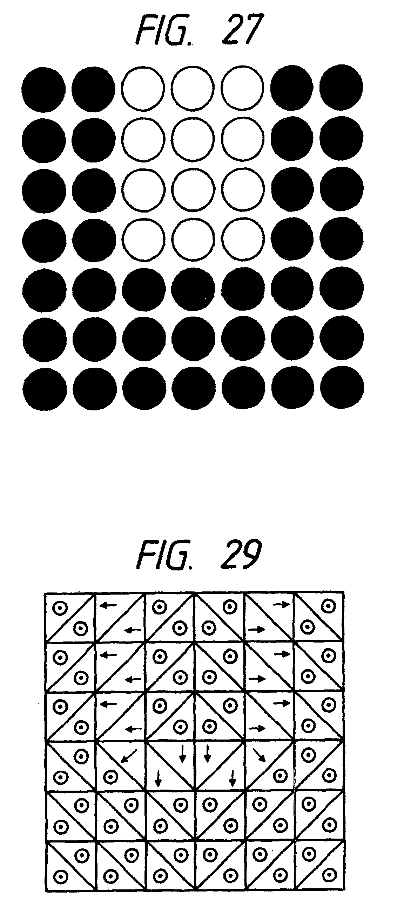

The routine proceeds to step 302 wherein the micro triangles of each of the cells formed in step 301 are defined in a three-dimensional space by expressing a position of each of the 7 × 7 pixels using x- and y-coordinates and a signal level (i.e., a brightness level) of each of the 7 × 7 pixels using a z-coordinate. Note that orthogonal projections of the triangles onto the xy-plane correspond to the seventy two micro triangles shown in Fig. 26. If, of the 7 × 7 (49) pixels, pixels of lower brightness levels are, as shown in Fig. 27, expressed by black circles, while pixels of high brightness levels are expressed by white circles, twelve (12) pixels on a central upper side represent a segment, and thirty seven (37) pixels therearound represent a background. Fig. 27 as a whole shows a segment end point pattern.

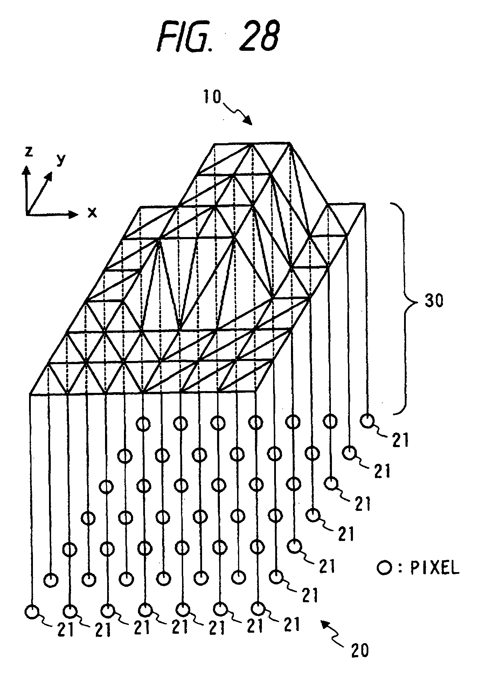

Fig. 28 shows a group of triangles 10 derived by expressing the end point pattern in Fig. 27 in a three-dimensional pace. White circles represent pixels 21 of a 7 × 7 matrix or cell 20, and a signal level (i.e., brightness level) of each of the pixels 21 is indicated along the z-axis. A group of triangles corresponding to the twelve pixels indicative of the segment in Fig. 27 are, thus, expressed as being arranged at locations higher than those of the other group of triangles corresponding to the background.

Subsequently, the routine proceeds to step 303 wherein unit normal vectors of all the triangles in the three-dimensional space are determined by calculating an outer product of two vectors oriented from one vertex of each of the triangles to other two vertexes to derive a normal vector and dividing it by its length.

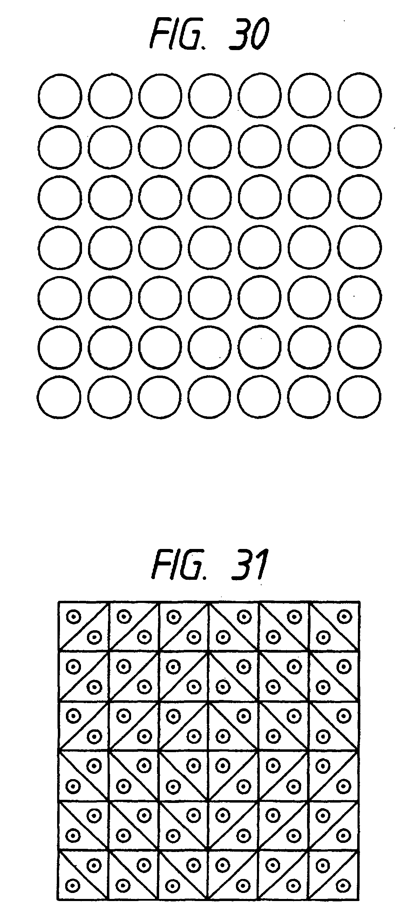

Fig 29 shows orthogonal projections of the unit normal vectors in the three-dimensional space shown in Fig. 28 onto the xy-plane. In Fig. 29, the normal vectors are expressed as extending from the reverse to the surface of the drawing and shown by circles having central points. In the following discussion, orthogonal projections like the ones shown in Fig. 29 are used in expressing the unit normal vectors. This is for the sake of simplicity of illustration and because it is possible to discuss the unit normal vectors using two-dimensional plane since the length of each of the normal vectors is expressed by a sine of an angle defined by the each normal vector and the z-axis.

The routine then proceeds to step 304 wherein it is determined whether the length of an orthogonal projection of the mean vector of all the normal vectors onto the xy-plane is greater than a threshold value th5 or not. If a NO answer is obtained, then the routine proceeds to step 306. Alternatively, if a YES answer is obtained, then the routine proceeds to step 305 wherein it is determined whether a dispersion value of x-, y-, and x-axis components of the normal vectors from those of the mean vector is greater than a threshold value th6 or not. The dispersion value may be found by calculating a square root of the sum of squares of differences in each of x-, y-, and z-axis components between each of the unit normal vectors and the mean vector and then adding the resultant values together.

The presence of the orthogonal projection of the mean vector onto the xy-plane means a slope of the whole of the cell as viewed macroscopically. The length of the orthogonal projection of the mean vector onto the xy-plane greater than the threshold value th6 means that the mean vector of all the normal vectors is oriented at a certain angle to the z-axis. Further, the dispersion value of the normal vectors shows the degree of undulations within the cell as viewed microscopically.

As an alternative to finding the undulations within the cell using the dispersion value of the normal vectors, it is possible to view as a texture region an area where the sum of areas of all the triangles in the three-dimensional space is greater than a given value or more or an area where a high-frequency component of spatial frequency components derived by the orthogonal transformation of the original picture is greater than a given value.

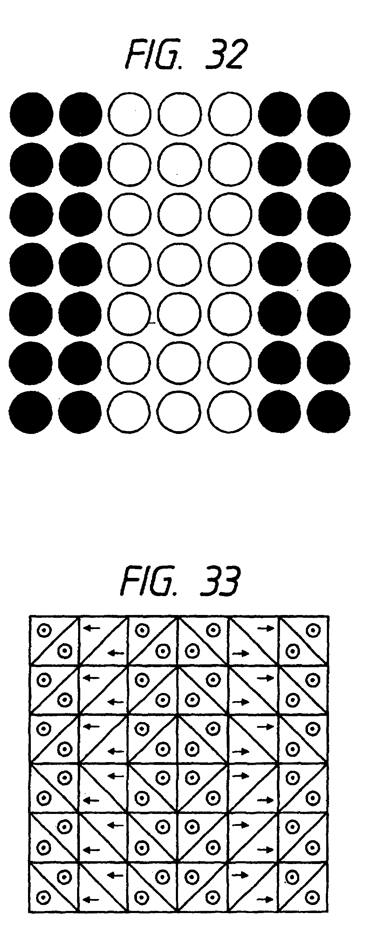

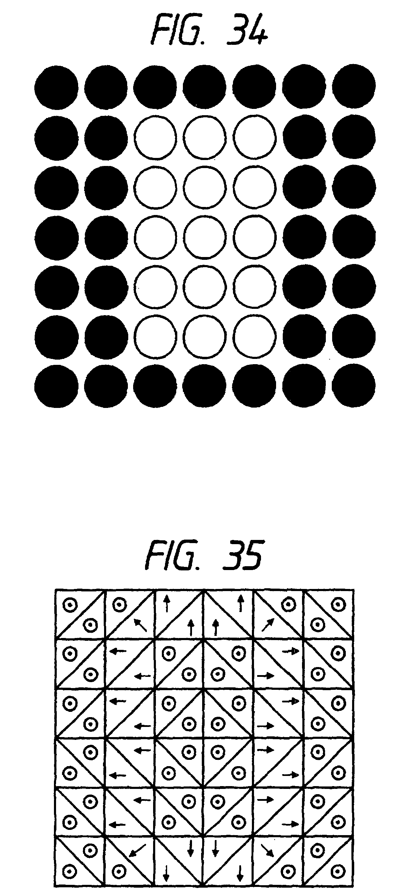

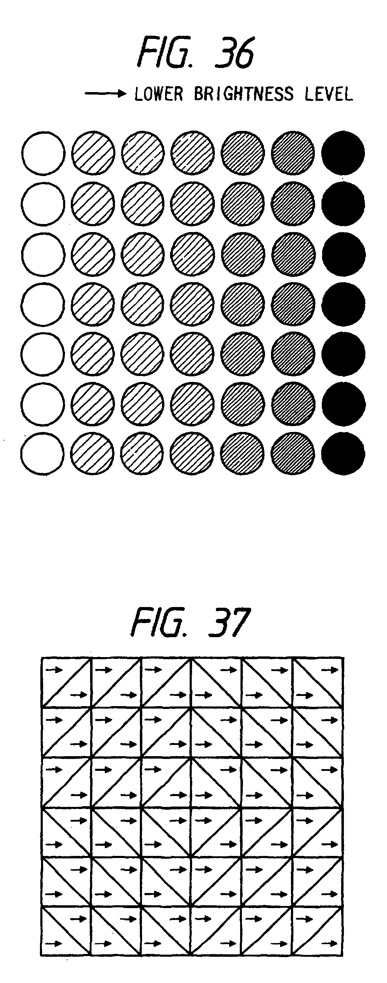

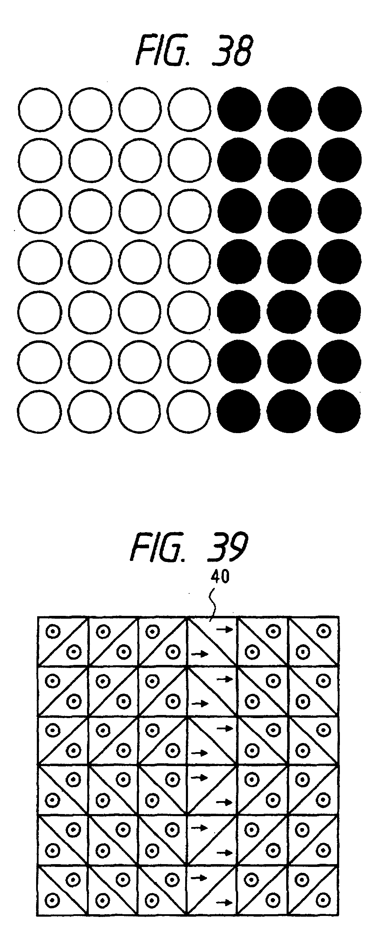

In this embodiment, an area where the orthogonal projection of the mean vector onto the xy-plane and the dispersion value of the normal vectors are greater than given values, respectively, is determined as a texture region, which will be described below in detail.
(1) If the length of the orthogonal projection of the mean vector of all the normal vectors onto the xy-plane is smaller than the threshold value th5, and the dispersion value of the x-, y-, and x-axis components of the normal vectors is smaller than the threshold value th6, this condition is met by a flat image, as shown in Fig. 30, formed with pixels having substantially the same brightness level. Orthogonal projections of normal vectors of the triangles of the flat image onto the xy-plane are shown in Fig. 31. It will be appreciated that the length of an orthogonal projection of the mean vector onto the xy-plane is zero (0), and the dispersion value is zero (0).
(2) If the length of the orthogonal projection of the mean vector onto the xy-plane is smaller than the threshold value th5, and the dispersion value of the x-, y-, and x-axis components of the normal vectors is greater than the threshold value th6, this condition is met by a line image, as shown in Fig. 32, wherein pixels of substantially the same brightness level are arranged in the same direction to form a line image having a certain width or a block image, as shown in Fig. 34, wherein pixels each having a higher brightness level are arranged at the center of the cell and surrounded by pixels each having a lower brightness level. Orthogonal projections of normal vectors of the triangles of the line image of Fig. 32 onto the xy-plane are shown in Fig. 33. It will be appreciated that the length of an orthogonal projection of the mean vector onto the xy-plane is zero (0) since the lengths of the normal vectors are canceled by each other, but the dispersion value is greater than the threshold value th6 since the undulations are great. Orthogonal projections of normal vectors of the triangles of the block image of Fig. 34 onto the xy-plane are shown in Fig. 35. It will be appreciated that the length of an orthogonal projection of the mean vector onto the xy-plane is, similar to Fig. 33, zero (0) since the lengths of the normal vectors are canceled by each other, and the dispersion value is greater than the threshold value th6 since the undulations are great.
(3) If the length of the orthogonal projection of the mean vector onto the xy-plane is greater than the threshold value th5, and the dispersion value of the x-, y-, and x-axis components of the normal vectors is smaller than the threshold value th6, this condition is met by a gradation image, as shown in Fig. 36, wherein brightness levels of pixels are graded in one direction (i.e., a horizontal direction in Fig. 36) or a contour image, as shown in Fig. 38, wherein a group of pixels of a lower brightness level are arranged adjacent a group of pixels of a higher brightness level and oriented in one direction (i.e., a vertical direction in Fig. 38) so as to have a constant width. Orthogonal projections of normal vectors of the triangles of the gradation image of Fig. 36 onto the xy-plane are shown in Fig. 37. It will be appreciated that the length of an orthogonal projection of the mean vector onto the xy-plane is greater than the threshold value th5, and the dispersion value is zero (0) since all the normal vectors have the same direction and the same length. Orthogonal projections of normal vectors of the triangles of the contour image of Fig. 38 onto the xy-plane are shown in Fig. 39. It will be appreciated that the length of an orthogonal projection of the mean vector onto the xy-plane is greater than the threshold value th5 since there is boundary 40 at which the brightness level is changed greatly, and the dispersion value shows a certain value, but are not greater than those of line, block, and end point images because of the boundary 40.
(4) If the length of the orthogonal projection of the mean vector onto the xy-plane is greater than the threshold value th5, and the dispersion value of the x-, y-, and x-axis components of the normal vectors is greater than the threshold value th6, this condition is met by the end point image, as already discussed in Fig. 27. Orthogonal projections of normal vectors of the triangles of the end point image onto the xy-plane are shown in Fig. 29. It will be appreciated that the length of an orthogonal projection of the mean vector onto the xy-plane is greater than the threshold value th5 since the lengths of the normal vectors are not canceled by each other, and the dispersion value is greater than the threshold value th6 since the undulations are great.

The same analyses as discussed above are true for images where a contrast between pixels and image patterns are different from the above images.

If any one of the above conditions (1) to (3) is met, then the routine proceeds to step 306 wherein a central pixel of the cell is set to zero in brightness level as a point within a non-texture region.

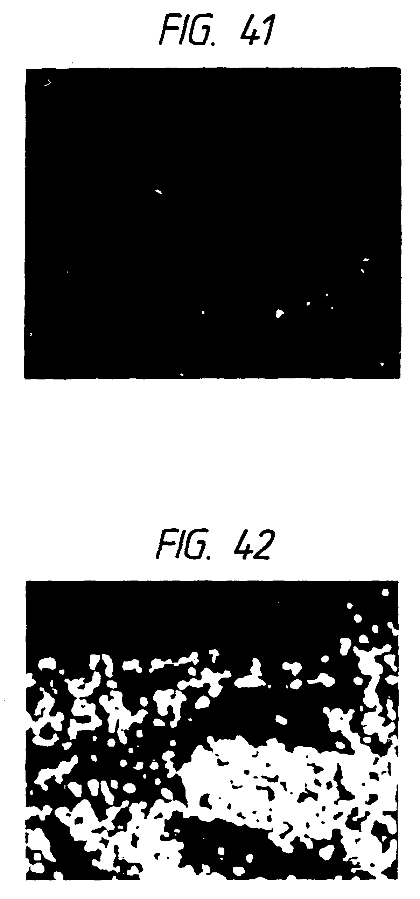

If the condition (4) is met, then the routine proceeds to step 307 wherein the central pixel of the cell is determined as a point within a texture region and its brightness level is set to a value derived by multiplying the dispersion value by a constant.
Specifically, the brightness level of the central pixel of the cell is determined based on the dispersion value of an image in the cell or the degree of undulations of the image. Fig. 40 shows a texture region emphasized picture derived by processing the picture of Fig. 8 through steps 101 to 307.

In the texture region emphasized picture in Fig. 40, portions having brightness levels greater than a given level (i.e., white portions) may be determined as having a high possibility that the portions belong to a texture region. Therefore, if such portions are concentrated or crowded in a particular area, it may be determined as a texture region. Isolated portions may be determined as end points of non-texture regions, that is, micro areas of detection error.

Each of the micro areas are then smoothed in step 308 in a manner wherein the average of values of 49 pixels of each of the cells in the micro areas is defined as a value of the central pixel. This operation provides a picture shown in Fig. 41.

The routine then proceeds to step 309 wherein the picture smoothed in step 308 is binary-coded using a given threshold value in a manner wherein when a brightness level (i.e., a signal level) of an objective pixel is smaller than the given threshold value, it is set to "0", as expressed in 8-bit (256) gradations, as a point in a non-texture region, while when the brightness level is greater than the threshold value, it is set to "255" as a point in a texture region. Fig. 42 shows a picture binary-coded in step 309. It is found that the micro error areas are, as can be seen in the drawing, much decreased as compared with the texture region emphasized picture in Fig. 40.

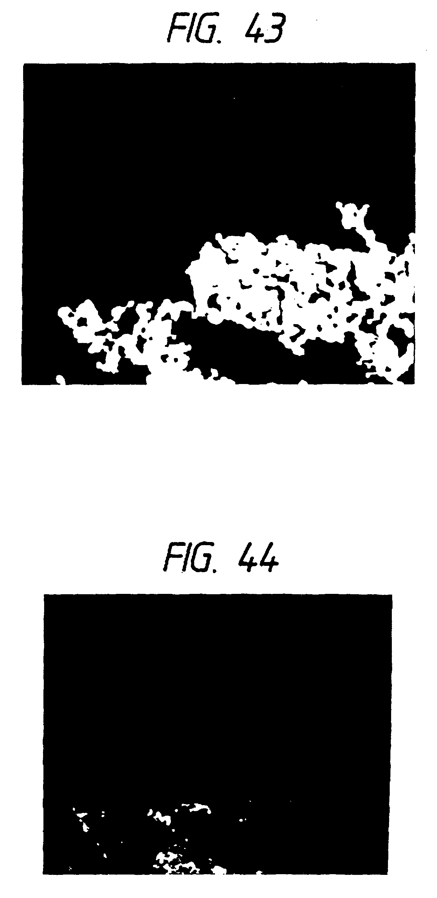

The routine then proceeds to step 310 wherein large areas each formed with pixels of a number greater than a threshold value th7 within white areas (i.e., areas formed with pixels each having the brightness of "255") of the binary-coded picture of Fig. 42 are left as they are, and pixels within other areas are set to "0" in brightness level. This eliminates the micro error areas from the binary-coded picture to derive a picture shown in Fig. 43.

It will be appreciated that texture regions painted white in the picture of Fig. 22 correspond to the original picture of Fig. 8 from which most of areas to be visually perceived as textures by the human eye are extracted. Fig. 44 shows a picture formed by extracting images which correspond to the white areas in Fig. 43 from the original picture in Fig. 8. It is found that Fig. 44 extracts substantially a texture of leaves.

While the present invention has been disclosed in terms of the preferred embodiment in order to facilitate a better understanding thereof, it should be appreciated that the invention an be embodied in various ways without departing from the scope of the appended claims. Therefore, the invention should be understood to include all possible embodiments and modification to the shown embodiments which can be embodied without departing from the scope of the appended claims.

## Claims

1. A method of extracting a texture region from an input image comprising the steps of:
establishing a line image from the input image using a spatial filter which determines for each pixel of the input image in which one of a plurality of preselected line directions the pixel and the pixels adjacent that pixel lie (102);
defining the direction of that pixel as the direction of the line;
determining the number of the pixels showing the same direction for each of the preselected directions (103); and
extracting from the input image as the texture region an area where the number of the pixels showing the same direction for at least one of the preselected directions is greater than a given value and the dispersion value of the pixels showing the same direction is greater than a given dispersion value.

2. A method as set forth in claim 1, wherein, in determining the defined direction of a pixel, the said pixels lying adjacent that pixel comprise a preselected number of pixels arranged in a matrix forming a cell with that pixel at a central position in the cell, and wherein the area extracted from the input image as the texture region is an area where the number of pixel showing the same direction for at least one of the preselected directions is greater than the given value and the sum of dispersion values of the pixels showing the same direction for all the preselected directions is greater than the given dispersion value (106).

3. A method as set forth in claim 1 or claim 2, wherein, for each pixel within the area determined as the texture region, the average value of the brightness levels of the pixels around that pixel is defined as the brightness level of that pixel (204).

4. A method as set forth in claim 1, 2 or 3, wherein an area where the number of pixels having a preselected brightness level is greater than a predetermined value within the texture region, is determined ultimately as the texture region (108).

5. A method as set forth in any preceding claim, wherein the area determined as the texture region is classified into different types of texture region according to both the number of pixels having the same direction for each of the preselected directions, arranged around each pixel within the area, and the dispersion value thereof.

6. A method as set forth in any preceding claim, wherein the method includes:
counting in each line of pixels in each preselected direction over a predetermined length how many pixels show the same direction as the preselected direction (201); and
extracting from the input image as the texture region an area where the number of the pixels counted in said counting step for each of the preselected directions is smaller than a given value (111).

7. A method as set forth in claim 6, wherein in determining the defined direction of a pixel, the said pixels lying adjacent that pixel comprise a predetermined number of pixels arranged in a matrix forming a cell with that pixel at a central position in the cell, and wherein any cell in which, of the pixels arranged in lines passing through the central pixel in the same direction as each of the preselected directions, the number of pixels showing the same direction as the predetermined direction is smaller than the given value for each of the preselected directions, is defined as lying within the texture region, and a value obtained by multiplying the sum of the pixels showing the same direction in all the preselected directions by a constant is defined as the brightness level of the central pixel of the cell (204).

8. A method as set forth in any preceding claim, wherein the method includes:
for each pixel forming the input image, defining a cell formed of a matrix of a plurality of pixels arranged around that pixel which is a central pixel of the matrix;
defining triangles having vertexes defined on a given adjacent three of the pixels in each of the cells (301);
defining said triangles in a three-dimensional space where positions of the pixels of each of the cells are expressed as coordinates on a two-dimensional plane and signal levels of the pixels are expressed as coordinates on an orthogonal axis extending perpendicular to the two-dimensional plane (302);
determining unit normal vectors of the triangles defined in the three-dimensional space and determining a mean vector of all the unit normal vectors (303);
detecting an area where there are end points of line images from the input image based on the mean vector of all the unit normal vectors (304); and
extracting the detected area from the input image as the texture region when the end points of the line images exist at a density greater than a given value (310).

9. A method as set forth in claim 8, wherein when the mean vector of all the unit normal vectors is orientated at more than a given angle to the orthogonal axis and when a dispersion value of the unit normal vectors from the mean vector is greater than a given value (305), the end points of the line images are determined as existing in the detected area at the said density than the given value.

10. A method as set forth in claim 8 or claim 9, wherein when the mean vector of all the unit normal vectors is orientated at more than a given angle to the orthogonal axis and when the sum of areas of all the triangles is greater than a given value, the end points of the line images are determined as existing in the detected area at the said density greater than the given value.

11. A method as set forth in claim 8, 9 or 10, wherein when a high-frequency component of spatial frequency components derived by orthogonal transformation of the input image is greater than a given value, the end points of the line images are determined as existing in the detected area at the said density greater than the given value.

## Patentansprüche

1. Verfahren zum Entnehmen eines texturierten Bereichs aus einem eingegebenen Bild mit den Schritten
Herstellen eines Linienbildes aus dem eingegebenen Bild unter Verwendung eines Raumfilters, das für ein jedes Bildelement des eingegebenen Bildes bestimmt, in welcher Richtung aus einer Vielzahl von vorausgewählten Linienrichtungen das Bildelement und die dem Bildelement benachbarten Bildelemente liegen (102),
Definieren der Richtung des Bildelements als die Richtung der Linie,
Bestimmen der Zahl der die gleiche Richtung zeigenden Bildelemente für eine jede der vorausgewählten Richtungen (103), und
Entnehmen eines Abschnitts aus dem eingegebenen Bild als den texturierten Bereich, an dem die Zahl der die gleiche Richtung zeigenden Bildelemente für zumindest eine der vorausgewählten Richtungen größer als ein bestimmter Wert ist und der Verteilungswert der die gleiche Richtung zeigenden Bildelemente größer als ein bestimmter Verteilungswert ist.

2. Verfahren nach Anspruch 1, wobei bei dem Schritt zum Bestimmen der definierten Richtung eines Bildelements die benachbart zu dem Bildelement liegenden Bildelemente eine vorausgewählte Zahl an Bildelementen aufweisen, die in einer Matrix angeordnet sind, die eine Zelle mit dem Bildelement an einer zentralen Position der Zelle bildet, und wobei der von dem eingegebenen Bild als der texturierte Bereich entnommene Abschnitt einen Abschnitt darstellt, an dem die Zahl von die gleiche Richtung zeigenden Bildelemente für zumindest eine der vorausgewählten Richtungen größer als der bestimmte Wert ist und die Summe der Verteilungswerte der die gleiche Richtung zeigenden Bildelemente für alle die vorausgewählten Richtungen größer als der bestimmte Verteilungswert ist (106).

3. Verfahren nach Anspruch 1 oder 2, wobei für ein jedes Bildelement in dem als dem texturierten Bereich bestimmten Abschnitt der Mittelwert der Helligkeitspegel der Bildelemente um das Bildelement als der Helligkeitspegel des Bildelements definiert wird (204).

4. Verfahren nach einem der Ansprüche 1, 2 oder 3, wobei ein Abschnitt, an dem die Zahl der Bildelemente mit einem vorausgewählten Helligkeitspegel größer als ein vorbestimmter Wert in dem texturierten Bereich ist, letztlich als der texturierte Bereich bestimmt wird (108).

5. Verfahren nach einem der vorstehenden Ansprüche, wobei der als der texturierte Bereich bestimmte Abschnitt gemäß der Zahl an um ein jedes Bildelement in dem Abschnitt angeordneten Bildelementen mit der gleichen Richtung für eine jede der vorausgewählten Richtungen und dem Verteilungswert davon in verschiedene Texturbereichsarten klassifiziert wird.

6. Verfahren nach einem der vorstehenden Ansprüche, ferner mit den Schritten
Zählen in einer jeden Linie von Bildelementen in einer jeden vorausgewählten Richtung über eine vorbestimmte Länge, wie viele Bildelemente die gleiche Richtung wie die vorausgewählte Richtung zeigen (201), und
Entnehmen eines Abschnitts aus dem eingegebenen Bild als den texturierten Bereich, an dem die Zahl der in dem Zählschritt gezählten Bildelemente für eine jede der vorausgewählten Richtungen kleiner als ein bestimmter Wert ist (111).

7. Verfahren nach Anspruch 6, wobei bei dem Schritt zum Bestimmen der definierten Richtung eines Bildelements die benachbart zu dem Bildelement liegenden Bildelemente eine vorbestimmte Zahl an Bildelementen aufweisen, die in einer Matrix angeordnet sind, die eine Zelle mit dem Bildelement an einer zentralen Position der Zelle ausbildet, und wobei jede Zelle, bei der von den Bildelementen, die in Linien angeordnet sind, die durch das zentrale Bildelement in der gleichen Richtung wie eine jede der vorausgewählten Richtungen verläuft, die Zahl von die gleiche Richtung wie die vorbestimmte Richtung zeigenden Bildelemente geringer als der bestimmte Wert für eine jede der vorausgewählten Richtungen ist, als in dem texturierten Bereich liegend definiert wird, und ein durch Multiplikation der Summe der die gleiche Richtung zeigenden Bildelemente in allen den vorausgewählten Richtungen mit einer Konstanten erlangter Wert als der Helligkeitspegel des zentralen Bildelements der Zelle definiert wird (204).

8. Verfahren nach einem der vorstehenden Ansprüche, ferner mit den Schritten
Definieren für ein jedes das eingegebene Bild erzeugende Bildelement eine Zelle, die aus einer Matrix einer Vielzahl von Bildelementen gebildet wird, welche um das ein zentrales Bildelement der Matrix darstellende Bildelement angeordnet sind,
Definieren von Dreiecken mit Ecken, welche an gegebenen benachbarten drei Bildelementen aus den Bildelementen festgelegt sind, in einer jeden der Zellen (301),
Definieren der Dreiecke in einem dreidimensionalen Raum, in dem Positionen der Bildelemente einer jeden der Zellen als Koordinaten an einer zweidimensionalen Fläche ausgedrückt werden und Signalpegel der Bildelemente als Koordinaten an einer senkrecht zu der zweidimensionalen Fläche verlaufenden orthogonalen Achse ausgedrückt werden (302),
Bestimmen von Einheitsnormalenvektoren der in dem dreidimensionalen Raum definierten Dreiecke und Bestimmen eines Mittelvektors von allen den Einheitsnormalenvektoren (303),
Erfassen eines Abschnitts auf der Grundlage des Mittelvektors von allen den Einheitsnormalenvektoren, an dem Endpunkte der Linienbilder von dem eingegebenen Bild vorhanden sind (304), und
Entnehmen des erfassten Abschnitts von dem eingegebenen Bild als den texturierten Bereich, wenn die Endpunkte der Linienbilder mit einer Dichte vorhanden sind, die größer als ein bestimmter Wert ist (310).

9. Verfahren nach Anspruch 8, wobei, wenn der Mittelvektor von allen den Einheitsnormalenvektoren eine Orientierung mit einem Winkel bezüglich der orthogonalen Achse aufweist, der größer als ein bestimmter Winkel ist, und wenn ein Verteilungswert der Einheitsnormalenvektoren von dem Mittelvektor größer als ein bestimmter Wert ist (305), die Endpunkte der Linienbilder als in dem erfassten Abschnitt mit der Dichte existierend bestimmt werden, die größer als der bestimmte Wert ist.

10. Verfahren nach Anspruch 8 oder 9, wobei, wenn der Mittelvektor von allen den Einheitsnormalenvektoren eine Orientierung mit einem Winkel bezüglich der orthogonalen Achse aufweist, der größer als ein bestimmter Winkel ist, und wenn die Summe der Abschnitte von allen den Dreiecken größer als ein bestimmter Wert ist, die Endpunkte der Linienbilder als in dem erfassten Abschnitt mit der Dichte existierend bestimmt werden, die größer als der bestimmte Wert ist.

11. Verfahren nach einem der Ansprüche 8, 9 oder 10, wobei, wenn eine Hochfrequenzkomponente von durch eine Orthogonaltransformation des eingegebenen Bildes gewonnenen Raumfrequenzkomponenten größer als ein bestimmter Wert ist, die Endpunkte der Linienbilder als in dem erfassten Abschnitt mit der Dichte existierend bestimmt werden, die größer als der bestimmte Wert ist.

## Revendications

1. Procédé d'extraction d'une région de texture d'une image d'entrée comprenant les étapes consistant à :
établir une image d'une ligne à partir de l'image d'entrée en utilisant un filtre spatial qui détermine, pour chaque pixel de l'image d'entrée, dans laquelle d'une pluralité de directions de lignes présélectionnées, sont situés le pixel et les pixels adjacents à ce pixel(102),
définir la direction de ce pixel comme étant la direction de la ligne,
déterminer le nombre des pixels présentant la même direction pour chacune des directions présélectionnées (103), et
extraire de l'image d'entrée en tant que région de texture une zone où le nombre des pixels présentant la même direction pour au moins l'une des directions présélectionnées est supérieures à une valeur donnée et la valeur de dispersion des pixels présentant la même direction est supérieure à une valeur de dispersion donnée.

2. Procédé selon la revendication 1, dans lequel, en déterminant la direction définie d'un pixel, lesdits pixels situés de façon adjacente à ce pixel comprennent un nombre présélectionné de pixels disposés suivant une matrice formant une cellule avec ce pixel à une position centrale dans la cellule, et dans lequel la zone extraite de l'image d'entrée en tant que région de texture est une zone où le nombre de pixels présentant la même direction pour au moins l'une des directions présélectionnées est supérieur à la valeur donnée et la somme des valeurs de dispersion des pixels présentant la même direction pour toutes les directions présélectionnées est supérieure à la valeur de dispersion donnée (106).

3. Procédé selon la revendication 1 ou la revendication 2, dans lequel, pour chaque pixel à l'intérieur de la zone déterminée en tant que région de texture, la valeur moyenne des niveaux de brillance des pixels autour de ce pixel est définie comme étant le niveau de brillance de ce pixel (204).

4. Procédé selon la revendication 1, 2 ou 3, dans lequel une zone où le nombre des pixels présentant un niveau de brillance présélectionné est supérieur à une valeur prédéterminée à l'intérieur de la région de texture, est déterminée finalement en tant que région de texture (108).

5. Procédé selon l'une quelconque des revendications précédentes, dans lequel la zone déterminée en tant que région de texture est classée en des types différents de régions de texture conformément à la fois au nombre des pixels présentant la même direction pour chacune des directions présélectionnées, disposés autour de chaque pixel à l'intérieur de la zone, et la valeur de dispersion de ceux-ci.

6. Procédé selon l'une quelconque des revendications précédentes, dans lequel le procédé comprend :
le comptage dans chaque ligne de pixels dans chaque direction présélectionnée sur une longueur prédéterminée du nombre de pixels qui présentent la même direction que la direction présélectionnée (201), et
l'extraction à partir de l'image d'entrée en tant que région de texture d'une zone où le nombre des pixels comptés dans ladite étape de comptage pour chacune des directions présélectionnées est plus petit qu'une valeur donnée (111).

7. Procédé selon la revendication 6, dans lequel, lors de la détermination de la direction définie d'un pixel, lesdits pixels situés de façon adjacente à ce pixel comprennent un nombre prédéterminé de pixels disposés suivant une matrice formant une cellule avec ce pixel à une position centrale dans la cellule, et dans lequel toute cellule quelconque dans laquelle, parmi les pixels disposés en ligne passant par le pixel central dans la même direction que chacune des directions présélectionnées, le nombre de pixels présentant la même direction que la direction prédéterminée est plus petit que la valeur donnée pour chacune des directions présélectionnées, est définie comme étant située à l'intérieur de la région de texture, et une valeur obtenue en multipliant la somme des pixels présentant la même direction dans toutes les directions présélectionnées par une constante est définie comme étant le niveau de brillance du pixel central de la cellule (204).

8. Procédé selon l'une quelconque des revendications précédentes, dans lequel le procédé comprend :
pour chaque pixel formant l'image d'entrée, la définition d'une cellule formée d'une matrice d'une pluralité de pixels disposés autour de ce pixel qui est un pixel central de la matrice,
la définition de triangles présentant des sommets définis sur trois pixels adjacents donnés parmi les pixels dans chacune des cellules (301),
la définition desdits triangles dans un espace tridimensionnel où des positions des pixels de chacune des cellules sont exprimées sous forme de coordonnées sur un plan à deux dimensions et des niveaux de signaux des pixels sont exprimés sous forme de coordonnées sur un axe orthogonal s'étendant perpendiculairement au plan à deux dimensions (302),
la détermination de vecteurs normaux élémentaires des triangles définis dans l'espace à trois dimensions et la détermination d'un vecteur moyen de tous les vecteurs normaux élémentaires (303),
la détection d'une zone où il existe des points d'extrémité des images des lignes de l'image d'entrée, sur la base du vecteur moyen de tous les vecteurs normaux élémentaires (304), et
l'extraction de la zone détectée à partir de l'image d'entrée en tant que région de texture lorsque les points d'extrémité des images des lignes existent à une densité supérieure à une valeur donnée (310).

9. Procédé selon la revendication 8, dans lequel, lorsque le vecteur moyen de tous les vecteurs normaux élémentaires est orienté à plus d'un angle donné par rapport à l'axe orthogonal et lorsqu'une valeur de dispersion des vecteurs normaux élémentaires par rapport au vecteur moyen est supérieur à une valeur donnée (305), les points d'extrémité des images des lignes sont déterminés comme existant dans la zone détectée à ladite densité supérieure à la valeur donnée.

10. Procédé selon la revendication 8 ou la revendication 9, dans lequel, lorsque le vecteur moyen de tous les vecteurs normaux élémentaires est orienté à plus d'un angle donné par rapport à l'axe orthogonal et lorsque la somme des surfaces de tous les triangles est supérieure à une valeur donnée, les points d'extrémité des images des lignes sont déterminés comme existant dans la zone détectée à ladite densité supérieure à la valeur donnée.

11. Procédé selon la revendication 8, 9 ou 10, dans lequel, lorsqu'une composante à haute fréquence des composantes de fréquences spatiales obtenues grâce à une transformation orthogonale de l'image d'entrée est supérieure à une valeur donnée, les points d'extrémité des images des lignes sont déterminés comme existant dans la zone détectée à ladite densité supérieure à la valeur donnée.
